# EUROPEAN PATENT APPLICATION

(11) **EP 2 733 407 A2**
(43) Date of publication of application: **21.05.2014**
(21) Application number: 13159260.2
(22) Date of filing: 14.03.2013
(51) Int. Cl.: F16M 11/04, F16M 13/02

(54) **Support structure of electronic device**

(30) Priority: 14.11.2012 TW 101222033 U
(71) Applicant: Compal Broadband Networks Inc., 114 Taipei City (TW)
(72) Inventor: Hsu, Liang-San, 247 New Taipei City (TW); Chiu, Chih-Hsin, 302 Hsinchu County (TW)
(74) Representative: Becker Kurig Straus

(57) **Abstract**

A support structure (104) for supporting an electronic device (100) is disclosed. Bilateral sides of a housing (102) of the electronic device (100) have substantially symmetrical grooves (106, 108) arranged in quadrilateral. The support structure (104) includes a bottom element (110); and two hooking elements (112, 114), juxtaposing in parallel on the bottom element (110) and substantially perpendicular to the bottom element (110), wherein a distance between the two hooking elements (112, 114) is substantially equal to a width of the housing (102) and each of the two hooking elements (112, 114) includes a hook structure (118, 120) for linking the quadrilateral grooves (106, 108) of the bilateral sides of the housing (102).

## Description

### Field of the Invention

The present invention relates to a support structure for an electronic device, and especially relates to a support structure capable of avoiding an antenna in the electronic device too close to a support surface and affecting a transceiving performance of the antenna.

### Background of the Invention

With the continuous development of wireless communication technology, requirements of network transmitting capacity and bandwidth are also increased. Therefore, the industry has developed a communication technology of multi-input multi-output (MIMO) ; that is, the related electronic products may simultaneously transmit and receive wireless signals through multiple of, or groups of, antennas to significantly increase the data throughput and the transmitting distance under the condition of not increasing the bandwidth or total transmit power expenditure, so as to effectively enhance the spectral efficiency and the transmitting rate of the wireless communication system and to improve the communication quality.

The MIMO communication technology utilizes the spatial multiplexing to improve the bandwidth efficiency, so the method of equipping the antenna or the external environment may affect the performance of MIMO. For example, when a wireless communication product supporting the MIMO communication technology is hanged on a wall, since parts of the antennas may be too close to the wall, the transmission of radio wave is blocked and the transceiving performance is affected. Therefore, improving the support structure of the traditional wireless communication product to avoid affecting the transmitting performance has become one of the industry goals.

### Summary of the Invention

This in mind, the present invention aims at providing a support structure and related electronic device capable of avoiding an antenna in the electronic device too close to a support surface to affect transceiving performance of the antenna.

This is achieved by a support structure and an electronic device according to claims 1 and 2. The dependent claims pertain to corresponding further developments and improvements.

As will be seen more clearly from the detailed description following below, the claimed support structure for supporting an electronic device, wherein bilateral sides of a housing of the electronic device have substantially symmetrical grooves arranged in quadrilateral, includes a bottom element; and two hooking elements, juxtaposing in parallel on the bottom element and substantially perpendicular to the bottom element, wherein a distance between the two hooking elements is substantially equal to a width of the housing and each of the two hooking elements includes a hook structure for linking the quadrilateral grooves of the bilateral sides of the housing.

In another aspect, as will be seen more clearly from the detailed description following below, the claimed electronic device includes a housing, for containing an operating circuit of the electronic device, wherein bilateral sides of a housing of the electronic device have substantially symmetrical grooves arranged in quadrilateral; and a support structure, for supporting the electronic device comprising a bottom element; and two hooking elements, juxtaposing in parallel on the bottom element and substantially perpendicular to the bottom element, wherein a distance between the two hooking elements is substantially equal to a width of the housing and each of the two hooking elements includes a hook structure for linking the quadrilateral grooves of the bilateral sides of the housing.

### Brief Description of the Drawings

FIG. 1 illustrates a schematic diagram of decomposition of an electronic device hanged on a wall according to an embodiment of the present invention.
FIG. 2 illustrates a schematic diagram of an electronic device hanged on a wall according to an embodiment of the present invention.
FIG. 3 illustrates a schematic diagram of decomposition of an electronic device stood on a placing surface according to an embodiment of the present invention.
FIG. 4 illustrates a schematic diagram of an electronic device stood on a placing surface according to an embodiment of the present invention.
FIG. 5 illustrates a schematic diagram of a cross-section of the electronic device in FIG. 2.
FIG. 6 illustrates a schematic diagram of a bottom side of a support structure according to an embodiment of the present invention.
FIG. 7 illustrates a schematic diagram of a bottom side of a support structure combining a housing according to an embodiment of the present invention.

### Detailed Description

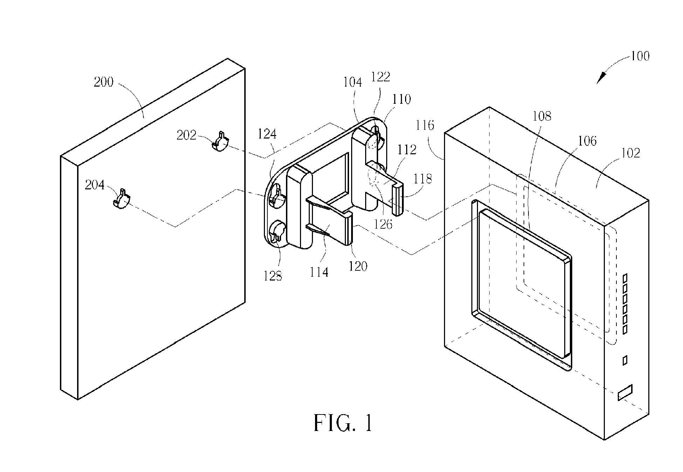

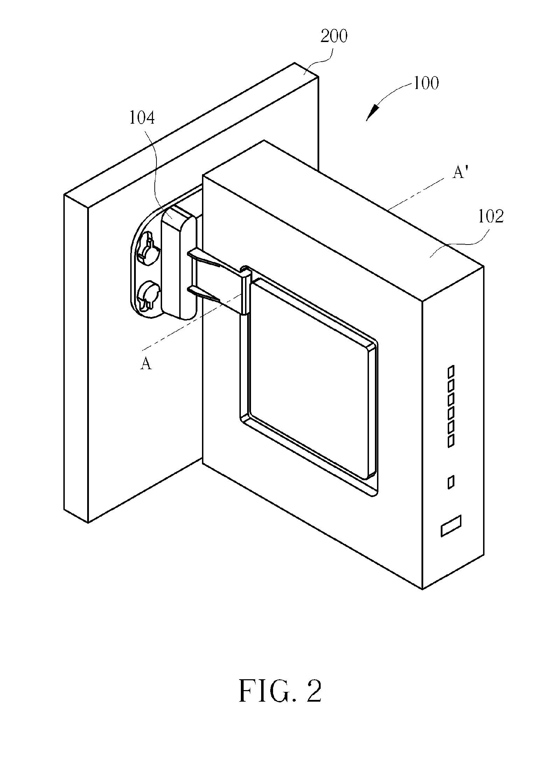

Please refer to FIG. 1 and FIG. 2. FIG. 1 illustrates a schematic diagram of decomposition of an electronic device 100 hanged on a wall 200 according to an embodiment of the present invention. FIG. 2 illustrates a schematic diagram of the electronic device 100 hanged on the wall 200 according to an embodiment of the present invention. As shown in FIG. 1, the electronic device 100 may be a wireless communication product supporting a multiple-input multiple-output (MIMO) communication technology, and is briefly composed of a housing 102 and a support structure 104 in appearance. The housing 102 is utilized for containing operation circuits of the electronic device 100, such as a plurality of antennas for the MIMO communication technology, circuit boards, or power supply modules, etc. Bilateral sides of the housing 102 have substantially symmetrical grooves 106, 108 arranged in quadrilateral, and may be linked by the support structure 104. Thus, the support structure 104 can support the housing 102 to be hanged on the wall 200, so as to avoid a lateral side of the housing 102 too close to the wall 200 and affecting the transceiving performance of the internal antenna.

In detail, the support structure 104 includes a bottom element 110 and hooking elements 112, 114. The support structure 104 may be integrally made or be combined by bonding, engaging, or locking, etc, and is preferably made of a hard elastic material, such as acrylonitrile butadiene styrene (ABS) resin, glass fiber, iron, or aluminum, etc. The hooking elements 112, 114 juxtapose in parallel on the bottom element 110 and are substantially perpendicular to the bottom element 110, and a distance between the two hooking elements 112, 114 is substantially equal to a width of the housing 102. Since the supporting structure 104 has an elastic characteristic, the distance between the hooking element 112 and the hooking element 114 is slightly greater than the width of the housing 102 by an external force. Thereby, the housing 102 can be placed into the middle of the hooking elements 112, 114 and combines with the support structure 104. At this moment, when a back plane 116 of the housing 102 and the bottom element 110 are laminated by combining, the external force disappears and the distance between the hooking elements 112, 114 is reverted to be substantially equal to the width of the housing by the elastic characteristic of the supporting structure 104. Then, hook structures 118, 120 of the hooking elements 112, 114 respectively link the grooves near the back plane 116 in the quadrilateral grooves 106, 108 of the bilateral sides of the housing 102 to combine with the housing 102 and form a hanging structure. As a result, as shown in FIG. 1, hanging holes 122, 124 of the support structure 104 and hooks 202, 204 of the wall 200 can be utilized for hanging the housing 102 on the wall 200, or optionally when the support structure 104 is upside-down, other hanging holes 128, 126 and the hooks 202, 204 of the wall 200 can also be utilized for hanging the housing 102 on the wall 200.

In short, since the back plane 116 of the housing 102 and the bottom element 110 of the support structure 104 are laminated, the housing 102 may be braced with the support structure 104, and since the hooking elements 112, 114 of the support structure 104 respectively link the quadrilateral grooves 106, 108 of the housing 102, the support structure 104 can be fixed on the housing 102. Thus, as shown in FIG. 2, the support structure 104 of the present invention can support the housing 102 to be hanged on the wall 102. Furthermore, a user may select a proper side of the quadrilateral grooves 106, 108 of the housing 102 for linking according to the requirement or the position of the antenna inside the housing, which is adapted to the present invention.

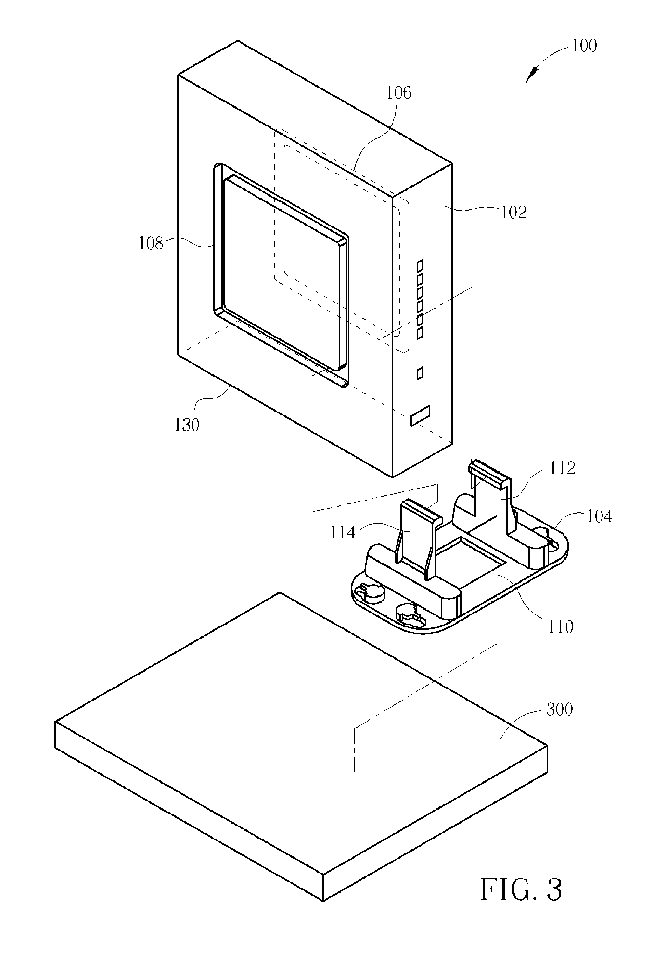

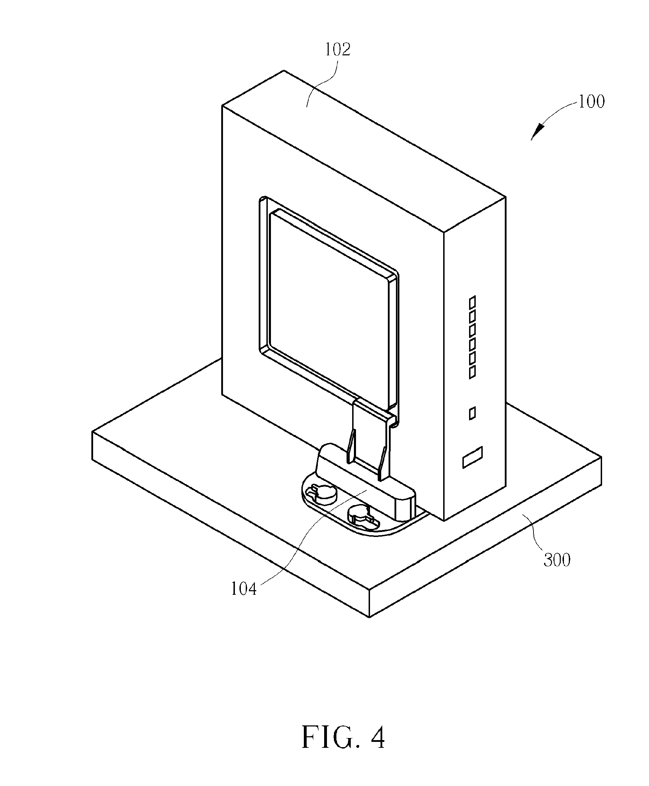

In addition to hanging the electronic device 100 on the wall 200, please refer to FIG. 3 and FIG. 4. FIG. 3 illustrates a schematic diagram of decomposition of the electronic device 100 stood on a placing surface 300 according to an embodiment of the present invention. FIG. 4 illustrates a schematic diagram of the electronic device 100 stood on the placing surface 300 according to an embodiment of the present invention. Similarly, as the above description, the support structure 104 links the quadrilateral grooves 106, 108 of the bilateral sides of the housing 102 and combines with the housing 102 by the elastic characteristic. The difference is that the hooking elements 112, 114 respectively link the grooves near a bottom plane 130 of the quadrilateral grooves 106, 108 of the bilateral sides of the housing 102 to combine with the housing 102 and form a standing structure. As a result, the housing 102 may stand on the placing surface 300 by utilizing the bottom element 110 of the support structure 104.

In other words, since the bottom plane 130 of the housing 102 and the bottom element 110 of the support structure 104 are laminated, the housing 102 can be braced with the support structure 104, and since the hooking elements 112, 114 of the support structure 104 respectively link the quadrilateral grooves 106, 108 of the housing 102, the support structure 104 can be fixed on the housing 102. Therefore, as shown in FIG 4, the support structure 104 of the present invention can support the housing 102 to stand on the placing surface 300, and since the width of the bottom element 110 is greater than the width of the bottom plane 130 of the housing 102, the electronic device 100 is more stably placed on the placing surface 300 compared with the housing 102 standing alone on the placing surface 300. Furthermore, the user may select a proper side of the quadrilateral grooves 106, 108 of the housing 102 for linking according to the position of the antenna inside the housing to avoid the antenna too close to the placing surface 300 and affecting the transceiving performance of the antenna.

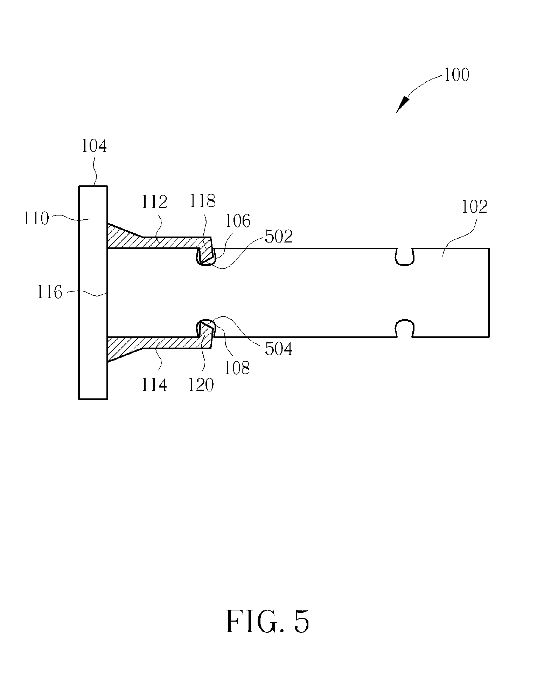

In order to more clearly describe the linking relation of the housing 102 and the support structure 104, please further refer to FIG. 5. FIG. 5 illustrates a schematic diagram of a cross-section along AA' of the electronic device 100 in FIG. 2. As shown in FIG. 5, since the hook structures 118, 120 of the hooking elements 112, 114 are linked and fixed in the quadrilateral grooves 106, 108, and the bottom element 110 and the back plane 116 are laminated, the housing 102 and the support structure 104 may be braced and fixed together. Noticeably, hooking planes of the hook structure 118, 120 are ramps 502, 504, and are designed to contribute the hooking elements 112, 114 to move to inside of the quadrilateral grooves 106, 108 when the hooking elements 112, 114 are stretched and linked to the housing 102. However, the implementation is not limited and may also be implemented by other shapes, such as a smooth surface, and may also be omitted in some embodiments.

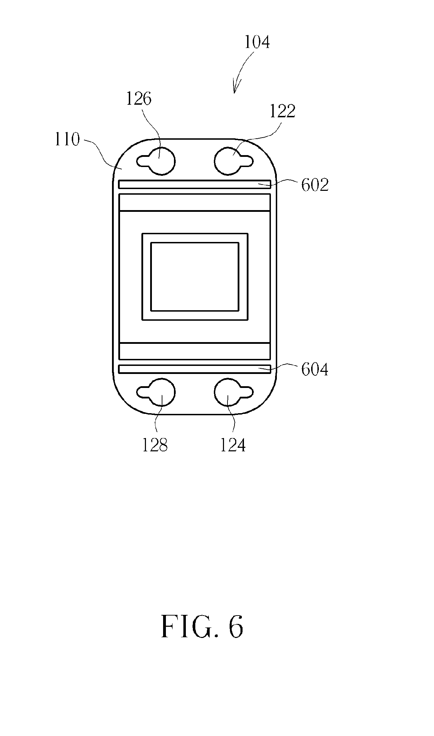

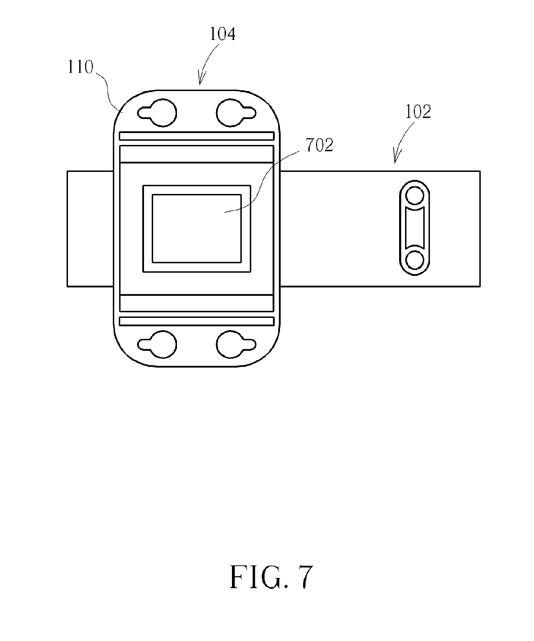

Furthermore, please refer to FIG. 6. FIG. 6 illustrates a schematic diagram of a bottom side of the support structure 104 according to an embodiment of the present invention.As shown in FIG 6, the hanging holes 122, 124, 126, 128 respectively consist of a circular hole with a large diameter and a circular hole with a small diameter, and can be hanged on the hooks of the wall. However, in other embodiments, other shapes may also be applied and are not limited. Besides, the support structure 104 further comprises non-slip components 602, 604. The non-slip components 602, 604 are non-slip gaskets pasted on the bottom side of the bottom element 110 and can avoid the electronic device 100 slipping when the electronic device 100 stands on the placing surface 300. In addition, please refer to FIG. 7. FIG. 7 illustrates a schematic diagram of a bottom side of the support structure 104 combining the housing 102 according to an embodiment of the present invention. As shown in FIG. 7, an opening 702 is reserved in the middle of the bottom element 110. The tag information on the surface of the housing 102 connecting with the bottom element 110 can be viewed through the opening 702 when the support structure 104 links the housing 102.

On the other hand, the implementation of the support structure 104 is not limited to a particular method. For example, the support structure 104 may be integrally made by a male mold and a female mold with a method of interspersing and breaking to reduce the production cost, and may also be made or combined by adopting other materials having an elastic characteristic. Any structure, which can hook the quadrilateral grooves of the bilateral sides of the housing, is suitable for the support structure of the present invention, and is not limited herein.

In summary, the plurality of antennas inside the electronic communication products may be too close to the support surface due to the placing method of the products. Thus, the transmission of the radio waves is blocked, and the performance of transceiving of the antenna is significantly affected. The support structure of the present invention links the quadrilateral grooves of the bilateral sides of the housing and the user can select a proper side of the quadrilateral grooves for linking according to different requirements, to avoid the antenna too close to the support surface and affecting the transceiving performance of the antenna, so as to improve the transceiving performance of the antenna.

## Claims

1. A support structure (104) for supporting an electronic device (100), wherein bilateral sides of a housing (102) of the electronic device (100) have substantially symmetrical grooves (106, 108) arranged in quadrilateral, **characterized by** the support structure (104) comprising:
a bottom element (110); and
two hooking elements (112, 114), juxtaposing in parallel on the bottom element (110) and substantially perpendicular to the bottom element (110), wherein a distance between the two hooking elements (112, 114) is substantially equal to a width of the housing (102) and each of the two hooking elements (112, 114) comprises a hook structure (118, 120) for linking the quadrilateral grooves (106, 108) of the bilateral sides of the housing (102).

2. An electronic device (100) comprising:
a housing (102), for containing an operating circuit of the electronic device (100), wherein bilateral sides of the housing (102) of the electronic device (100) have substantially symmetrical grooves (106, 108) arranged in quadrilateral; and
a support structure (104), for supporting the electronic device (100), **characterized by** comprising:
a bottom element (110); and
two hooking elements (112, 114), juxtaposing in parallel on the bottom element (110) and substantially perpendicular to the bottom element (110), wherein a distance between the two hooking elements (112, 114) is substantially equal to a width of the housing (102) and each of the two hooking elements (112, 114) comprises a hook structure (118, 120) for linking the quadrilateral grooves (106, 108) of the bilateral sides of the housing (102).

3. The support structure (104) of claim 1 or the electronic device (100) of claim 2, **characterized in that** the bottom element (110) comprises at least one hanging hole (122, 124, 126, 128) and utilizes the at least one hanging hole (122, 124, 126, 128) to be hanged on a wall (200), and each of the at least one hanging hole (122, 124, 126, 128) comprises a circular hole with a large diameter and a circular hole with a small diameter.

4. The support structure (104) of claim 1 or the electronic device (100) of claim 2, **characterized in that** the bottom element (110) comprises at least one non-slip component (602, 604).

5. The support structure (104) of claim 1 or the electronic device (100) of claim 2, **characterized in that** the hook structure (118, 120) is a ramp structure.

6. The support structure (104) of claim 1 or the electronic device (100) of claim 2, **characterized in that** a quadrilateral opening (702) is in the middle of the two hooking elements (112, 114).

7. The support structure (104) of claim 1 or the electronic device (100) of claim 2, **characterized in that** the support structure (104) is integrally made by a male mold and a female mold with a method of interspersing and breaking.

8. The support structure (104) of claim 1 or the electronic device (100) of claim 2, **characterized in that** the two hooking elements (112, 114) are made of a hard elastic material, a distance between the two hooking elements (112, 114) is greater than the width of the housing (102) by an external force, and when the external force disappears, the distance between the two hooking elements (112, 114) is reverted to be substantially equal to the width of the housing (102).
